# EUROPEAN PATENT APPLICATION

(11) **EP 4 566 918 A1**
(43) Date of publication of application: **11.06.2025**
(21) Application number: 24857435.2
(22) Date of filing: 13.03.2024
(51) Int. Cl.: B62D 5/04, B60G 21/00, B62D 15/02, F16H 7/02

(54) **STEERING SYSTEM AND MOBILITY COMPRISING SAME**

(30) Priority: 29.08.2023 KR 20230113580
(71) Applicant: HL Mando Corporation, Pyeongtaek-si, Gyeonggi-do 17962 (KR)
(72) Inventor: CHO, Seong Jong, Pyeongtaek-si, Gyeonggi-do 17962 (KR); HAN, Jeong Hwa, Pyeongtaek-si, Gyeonggi-do 17962 (KR); KIM, Jeong Hwan, Pyeongtaek-si, Gyeonggi-do 17962 (KR)
(74) Representative: Pfenning, Meinig & Partner mbB
(86) International application number: PCT/KR2024/003203
(87) International publication number: WO 2025/048093

(57) **Abstract**

According to the present embodiments, there may be provided a steering system comprising a steering input device including a steering shaft and a steering angle sensor sensing a rotational angle of the steering shaft, a steering actuator including a first output shaft connected with a knuckle arm and a steering motor connected with the first output shaft by a first reducer, a lean actuator including a second output shaft coupled with a lean bar and a lean motor connected with the second output shaft by a second reducer, and an electric controller receiving steering angle information from the steering angle sensor to control the steering motor and the lean motor.

## Description

### CROSS-REFERENCE TO RELATED APPLICATION

This application claims priority from Korean Patent Application No. 10-2023-0113580, filed on August 29, 2023, which is hereby incorporated by reference for all purposes as if fully set forth herein.

### BACKGROUND

### Field

The present embodiments relate to a steering system and a mobility vehicle including the same.

### Description of Related Art

Recently, interest in small mobility vehicles has been increasing. Small mobility vehicles may be used as urban mobility vehicles suitable for a small number of passengers and short distance travel. These small mobility vehicles are designed with a lightweight body and a high center of gravity. To compensate for the reduced driving stability caused by the lightweight body and high center of gravity and to provide drivers with dynamic driving, small mobility vehicles may be equipped with the lean function that tilts the body depending on the driving direction.

The steering system of the small mobility vehicle includes a steering input device for the driver to input steering wheel manipulation, a steering actuator for generating a steering force for steering the wheels according to the steering wheel manipulation, and a lean actuator for performing the lean function.

Given the small body and uses, small mobility vehicles require that the steering system equipped therein be small in size.

### BRIEF SUMMARY

Conceived in the foregoing background, the present embodiments relate to a steering system having a compact structure and capable of enhancing the driver's sense of steering and a mobility vehicle including the same.

According to the present embodiments, there may be provided a steering system comprising a steering input device including a steering shaft and a steering angle sensor sensing a rotational angle of the steering shaft, a steering actuator including a first output shaft connected with a knuckle arm and a steering motor connected with the first output shaft by a first reducer, a lean actuator including a second output shaft coupled with a lean bar and a lean motor connected with the second output shaft by a second reducer, and an electric controller receiving steering angle information from the steering angle sensor to control the steering motor and the lean motor.

According to the present embodiments, there may be provided a mobility vehicle comprising a steering system including a steering input device including a steering shaft and a steering angle sensor sensing a rotational angle of the steering shaft, a steering actuator including a first output shaft connected with a knuckle arm and a steering motor connected with the first output shaft by a first reducer, a lean actuator including a second output shaft coupled with a lean bar and a lean motor connected with the second output shaft by a second reducer, and an electric controller receiving steering angle information from the steering angle sensor to control the steering motor and the lean motor.

According to the present embodiments, there may be provided a steering system having a compact structure and capable of enhancing the driver's sense of steering and a mobility vehicle including the same.

### DESCRIPTION OF DRAWINGS

The above and other objects, features, and advantages of the disclosure will be more clearly understood from the following detailed description, taken in conjunction with the accompanying drawings, in which:
FIG. 1 is a view illustrating a configuration of a steering system according to the present embodiments;
FIGS. 2A, 2B, and 2C are views illustrating a mobility vehicle according to the present embodiments;
FIG. 3 is a perspective view illustrating a steering input device of a steering system according to the present embodiments;
FIG. 4 is an exploded perspective view illustrating a steering input device of a steering system according to the present embodiments;
FIG. 5 is a cross-sectional view illustrating a steering input device of a steering system according to the present embodiments;
FIG. 6 is an exploded perspective view illustrating a portion of a steering input device of a steering system according to the present embodiments;
FIG. 7 is a front view illustrating a portion of a steering input device of a steering system according to the present embodiments;
FIG. 8 is a front view illustrating a portion of a steering input device of a steering system according to the present embodiments;
FIG. 9 is a view illustrating operations of a steering input device of a steering system according to the present embodiments;
FIG. 10 is an exploded perspective view illustrating a portion of a steering input device of a steering system according to the present embodiments;
FIG. 11 is a plan view illustrating a portion of a steering input device of a steering system according to the present embodiments;
FIG. 12 is a cross-sectional view illustrating a portion of a steering input device of a steering system according to the present embodiments;
FIG. 13 is a plan view illustrating a portion of a steering input device of a steering system according to the present embodiments;
FIGS. 14A and 14B are cross-sectional views illustrating a portion of a steering input device of a steering system according to the present embodiments;
FIG. 15 is a perspective view illustrating a steering actuator of a steering system according to the present embodiments;
FIG. 16 is a perspective view illustrating a steering actuator and a Pitman arm of a steering system according to the present embodiments;
FIG. 17 is an exploded perspective view illustrating a portion of a steering actuator of a steering system according to the present embodiments;
FIG. 18 is a cross-sectional view illustrating a steering actuator of a steering system according to the present embodiments;
FIG. 19 is an exploded perspective view illustrating a portion of a steering actuator of a steering system according to the present embodiments;
FIG. 20 is a cross-sectional view illustrating a steering actuator of a steering system according to the present embodiments;
FIG. 21 is an exploded perspective view illustrating a steering actuator of a steering system according to the present embodiments;
FIG. 22 is a bottom view illustrating a portion of a steering actuator of a steering system according to the present embodiments;
FIG. 23 is a plan view illustrating a portion of a steering actuator of a steering system according to the present embodiments;
FIG. 24 is a perspective view illustrating a lean actuator of a steering system according to the present embodiments;
FIG. 25 is an exploded perspective view illustrating a lean actuator of a steering system according to the present embodiments;
FIG. 26 is a cross-sectional view illustrating a lean actuator of a steering system according to the present embodiments;
FIG. 27 is an exploded perspective view illustrating a portion of a lean actuator of a steering system according to the present embodiments;
FIG. 28 is a front view illustrating a portion of a lean actuator of a steering system according to the present embodiments;
FIG. 29 is a front view illustrating a portion of a lean actuator of a steering system according to the present embodiments; and
FIG. 30 is an exploded perspective view illustrating a portion of a lean actuator of a steering system according to the present embodiments.

### DETAILED DESCRIPTION

In the following description of examples or embodiments of the disclosure, reference will be made to the accompanying drawings in which it is shown by way of illustration specific examples or embodiments that can be implemented, and in which the same reference numerals and signs can be used to designate the same or like components even when they are shown in different accompanying drawings from one another. Further, in the following description of examples or embodiments of the disclosure, detailed descriptions of well-known functions and components incorporated herein will be omitted when it is determined that the description may make the subject matter in some embodiments of the disclosure rather unclear. The terms such as "including", "having", "containing", "constituting" "make up of", and "formed of" used herein are generally intended to allow other components to be added unless the terms are used with the term "only". As used herein, singular forms are intended to include plural forms unless the context clearly indicates otherwise.

Terms, such as "first", "second", "A", "B", "(A)", or "(B)" may be used herein to describe elements of the disclosure. Each of these terms is not used to define essence, order, sequence, or number of elements etc., but is used merely to distinguish the corresponding element from other elements.

When it is mentioned that a first element "is connected or coupled to", "contacts or overlaps" etc. a second element, it should be interpreted that, not only can the first element "be directly connected or coupled to" or "directly contact or overlap" the second element, but a third element can also be "interposed" between the first and second elements, or the first and second elements can "be connected or coupled to", "contact or overlap", etc. each other via a fourth element. Here, the second element may be included in at least one of two or more elements that "are connected or coupled to", "contact or overlap", etc. each other.

When time relative terms, such as "after," "subsequent to," "next," "before," and the like, are used to describe processes or operations of elements or configurations, or flows or steps in operating, processing, manufacturing methods, these terms may be used to describe non-consecutive or non-sequential processes or operations unless the term "directly" or "immediately" is used together.

In addition, when any dimensions, relative sizes etc. are mentioned, it should be considered that numerical values for an elements or features, or corresponding information (e.g., level, range, etc.) include a tolerance or error range that may be caused by various factors (e.g., process factors, internal or external impact, noise, etc.) even when a relevant description is not specified. Further, the term "may" fully encompasses all the meanings of the term "can".

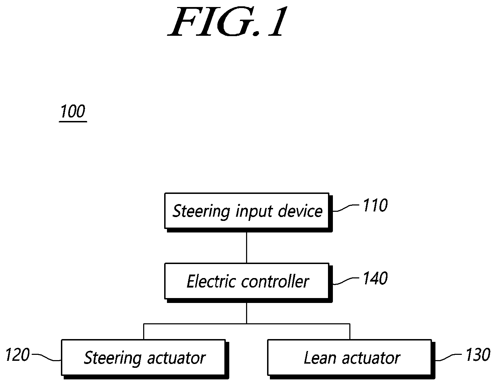

FIG. 1 is a view illustrating a configuration of a steering system according to the present embodiments.

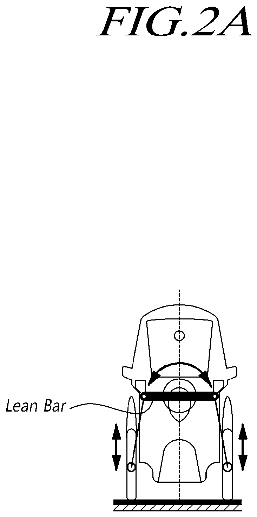

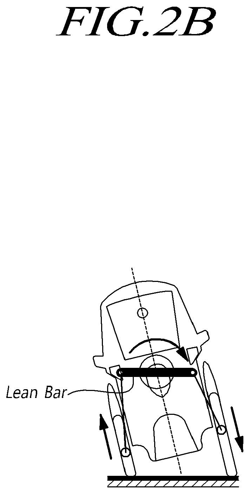

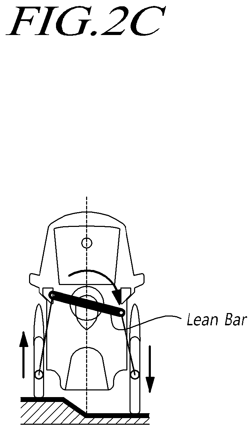

FIGS. 2A, 2B, and 2C are views illustrating a mobility vehicle according to the present embodiments.

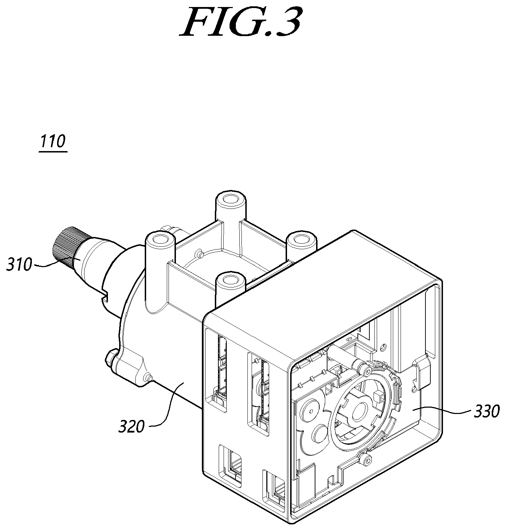

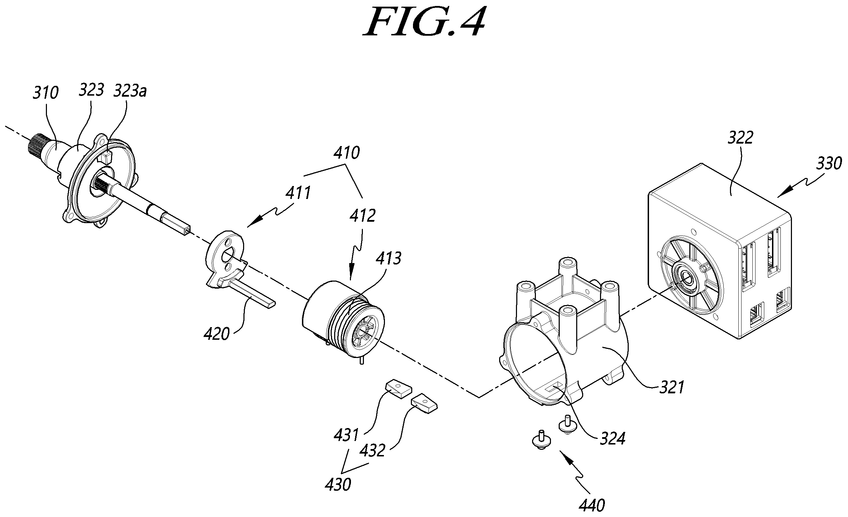

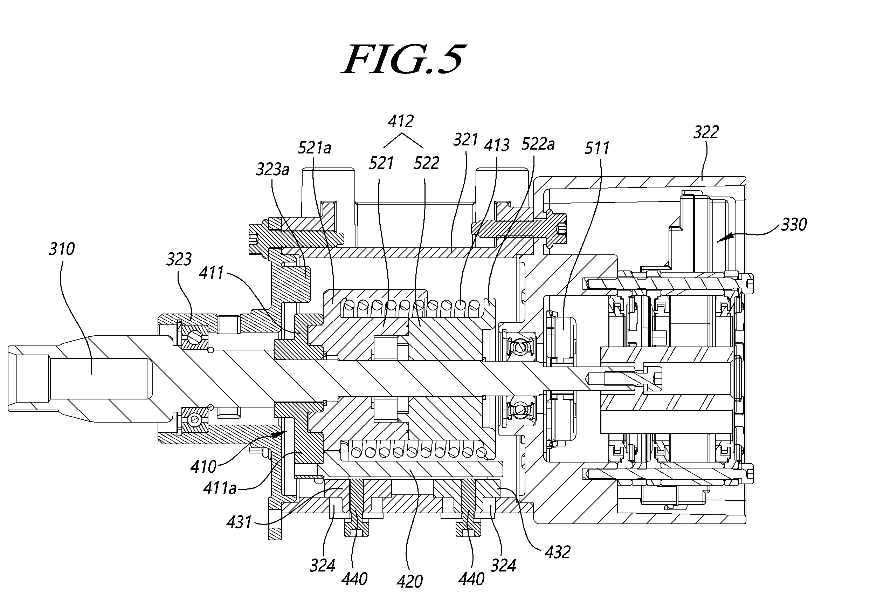

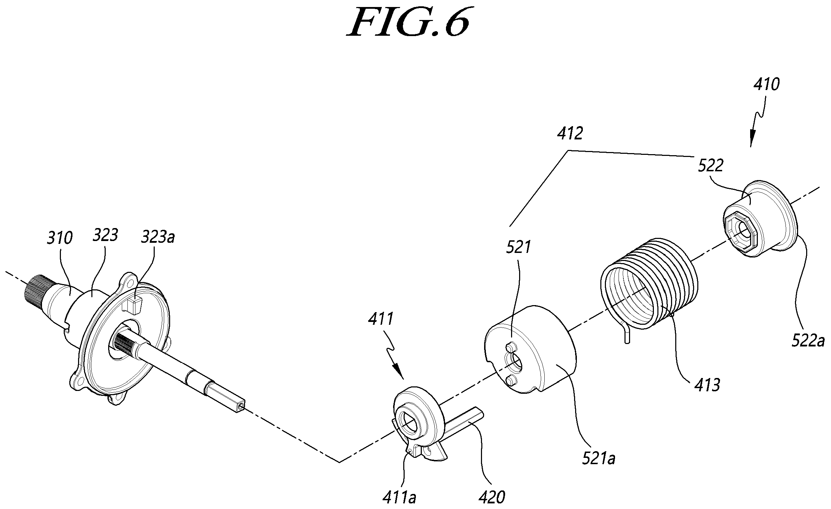

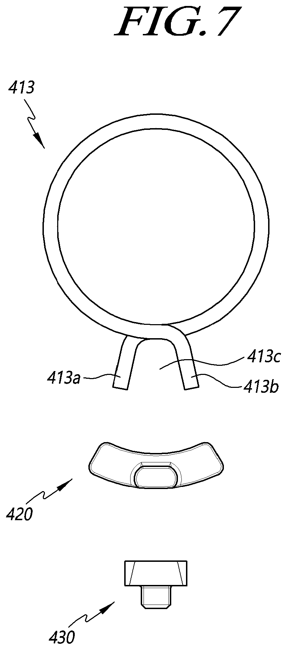

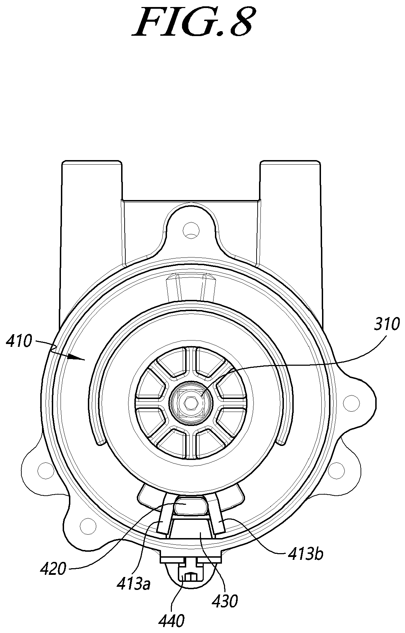

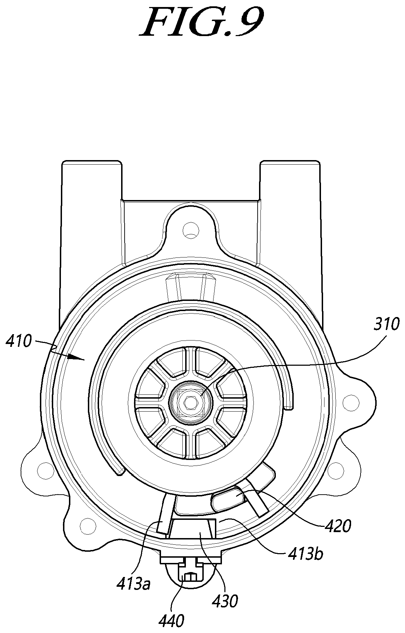

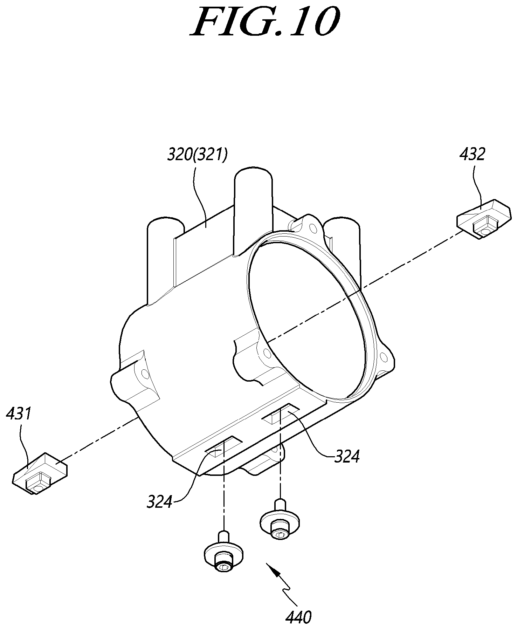

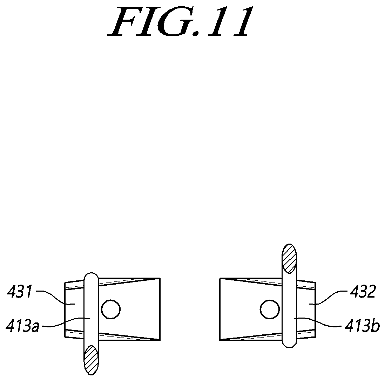

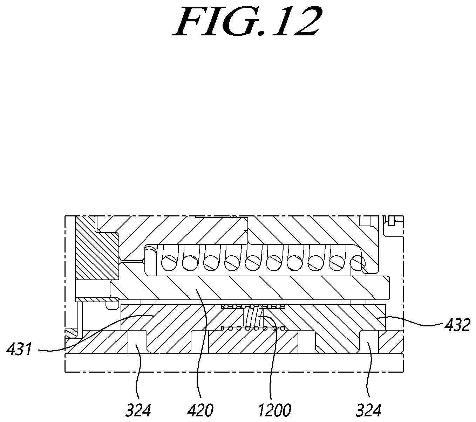

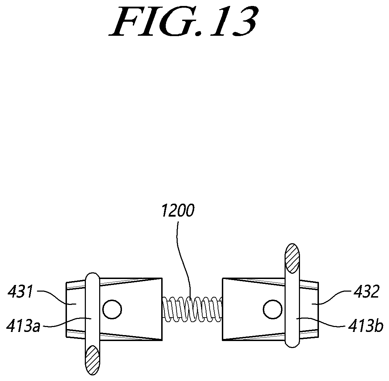

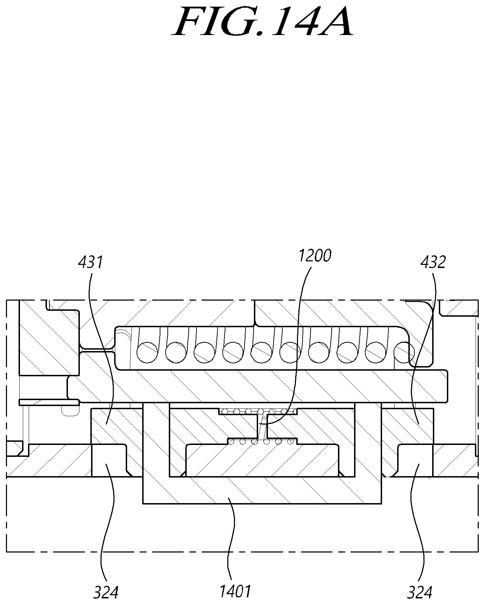

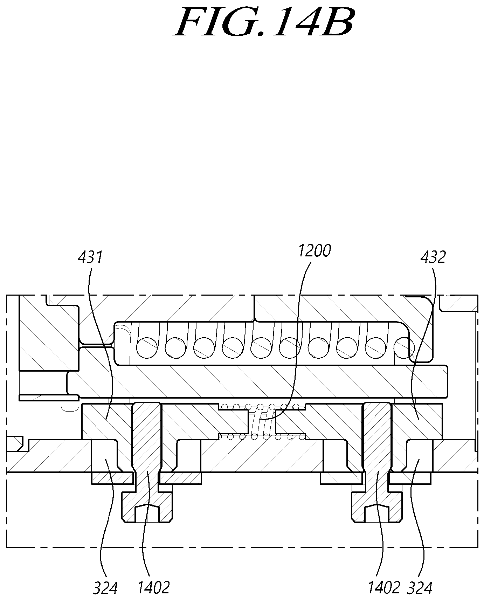

FIG. 3 is a perspective view illustrating a steering input device of a steering system according to the present embodiments. FIG. 4 is an exploded perspective view illustrating a steering input device of a steering system according to the present embodiments. FIG. 5 is a cross-sectional view illustrating a steering input device of a steering system according to the present embodiments. FIG. 6 is an exploded perspective view illustrating a portion of a steering input device of a steering system according to the present embodiments. FIG. 7 is a front view illustrating a portion of a steering input device of a steering system according to the present embodiments. FIG. 8 is a front view illustrating a portion of a steering input device of a steering system according to the present embodiments. FIG. 9 is a view illustrating operations of a steering input device of a steering system according to the present embodiments. FIG. 10 is an exploded perspective view illustrating a portion of a steering input device of a steering system according to the present embodiments. FIG. 11 is a plan view illustrating a portion of a steering input device of a steering system according to the present embodiments. FIG. 12 is a cross-sectional view illustrating a portion of a steering input device of a steering system according to the present embodiments. FIG. 13 is a plan view illustrating a portion of a steering input device of a steering system according to the present embodiments. FIGS. 14A and 14B are cross-sectional views illustrating a portion of a steering input device of a steering system according to the present embodiments.

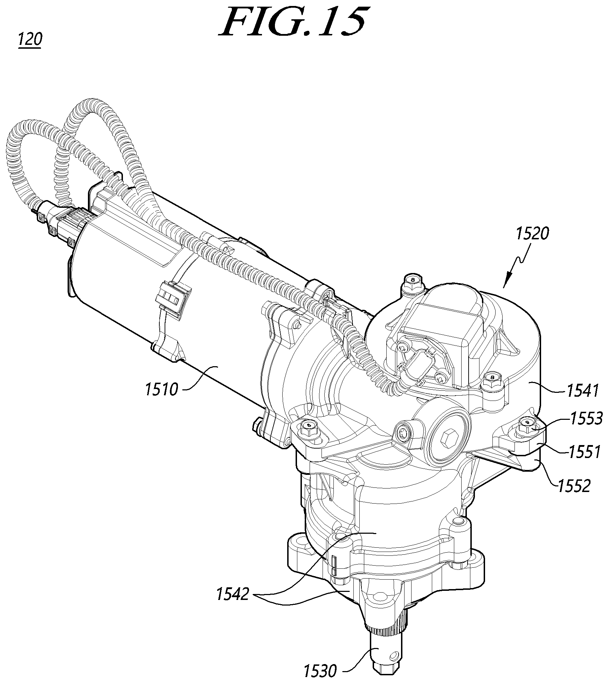

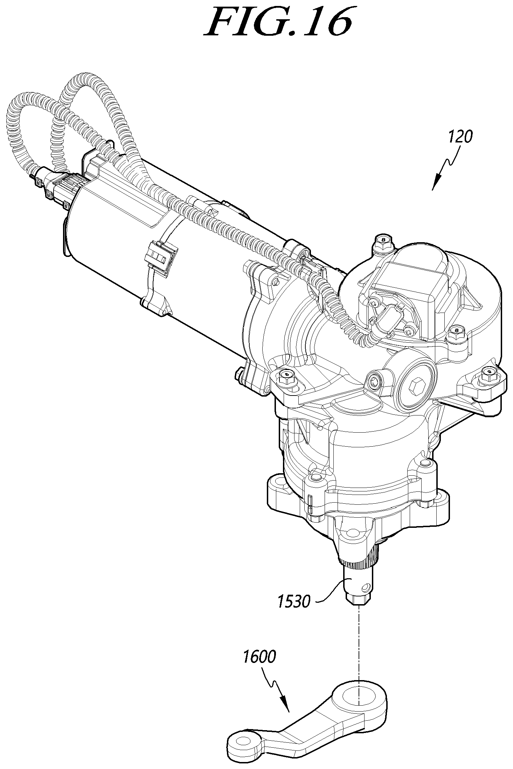

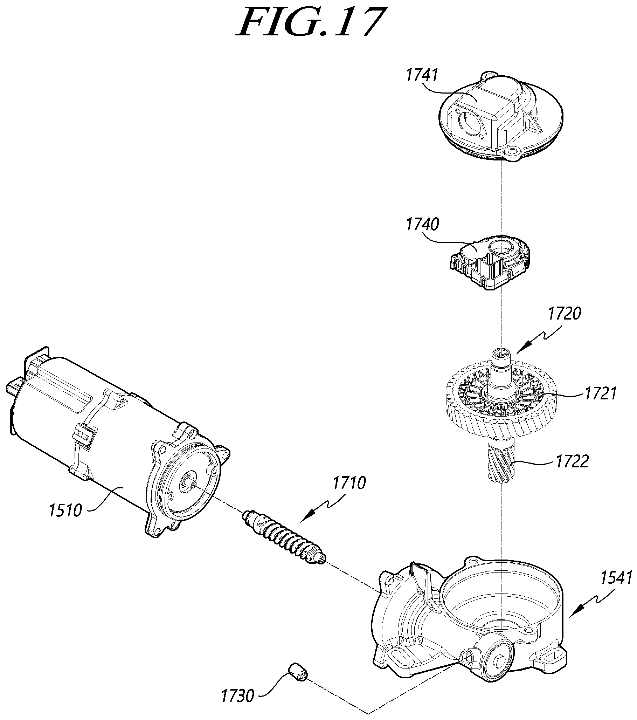

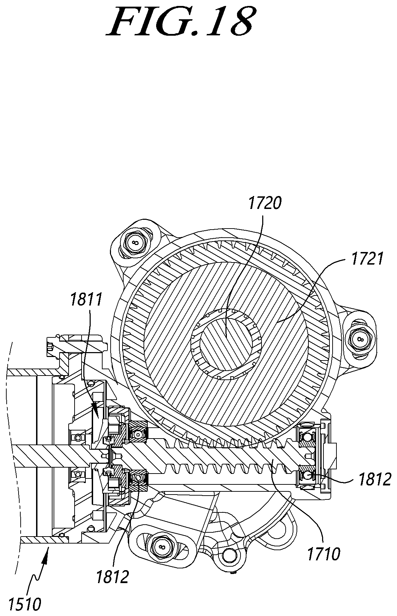

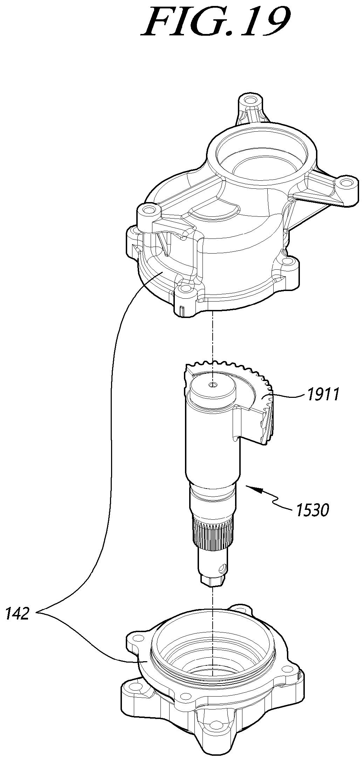

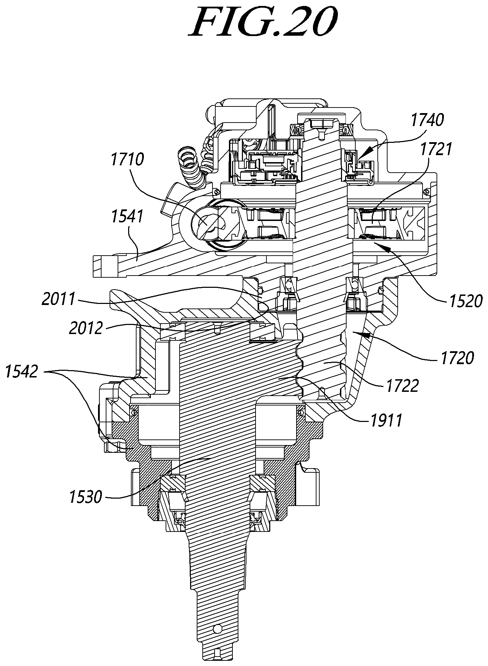

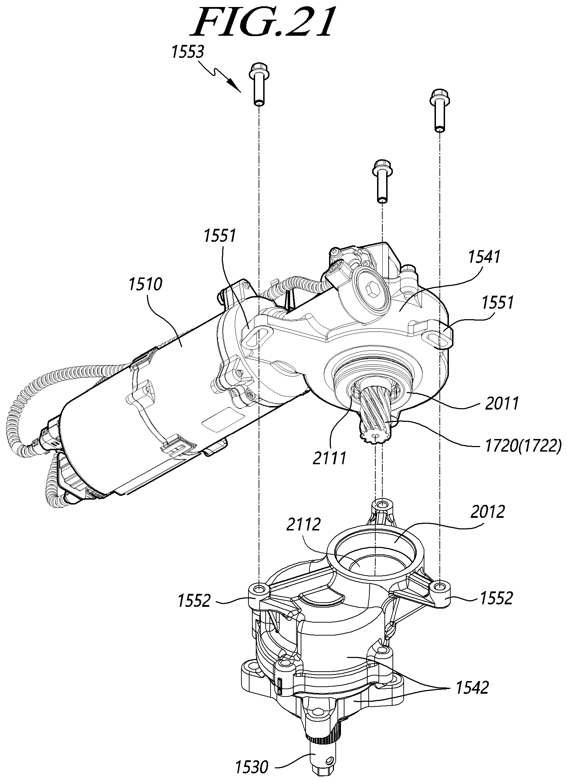

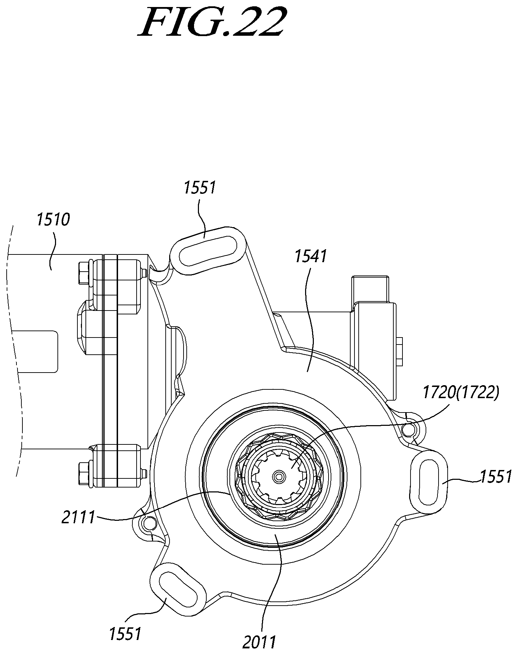

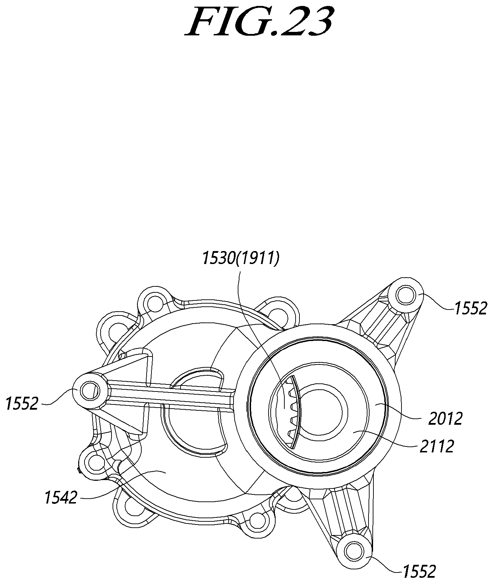

FIG. 15 is a perspective view illustrating a steering actuator of a steering system according to the present embodiments. FIG. 16 is a perspective view illustrating a steering actuator and a Pitman arm of a steering system according to the present embodiments. FIG. 17 is an exploded perspective view illustrating a portion of a steering actuator of a steering system according to the present embodiments. FIG. 18 is a cross-sectional view illustrating a steering actuator of a steering system according to the present embodiments. FIG. 19 is an exploded perspective view illustrating a portion of a steering actuator of a steering system according to the present embodiments. FIG. 20 is a cross-sectional view illustrating a steering actuator of a steering system according to the present embodiments. FIG. 21 is an exploded perspective view illustrating a steering actuator of a steering system according to the present embodiments. FIG. 22 is a bottom view illustrating a portion of a steering actuator of a steering system according to the present embodiments. FIG. 23 is a plan view illustrating a portion of a steering actuator of a steering system according to the present embodiments.

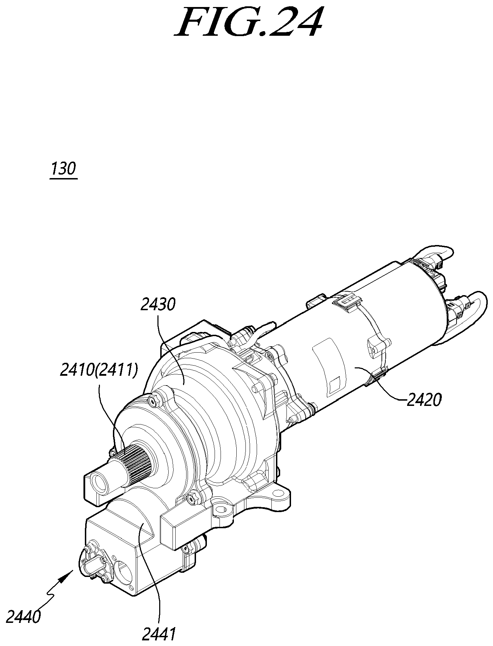

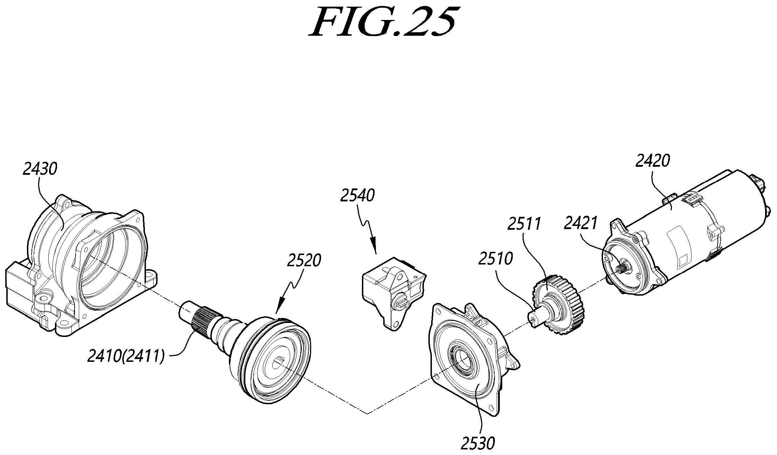

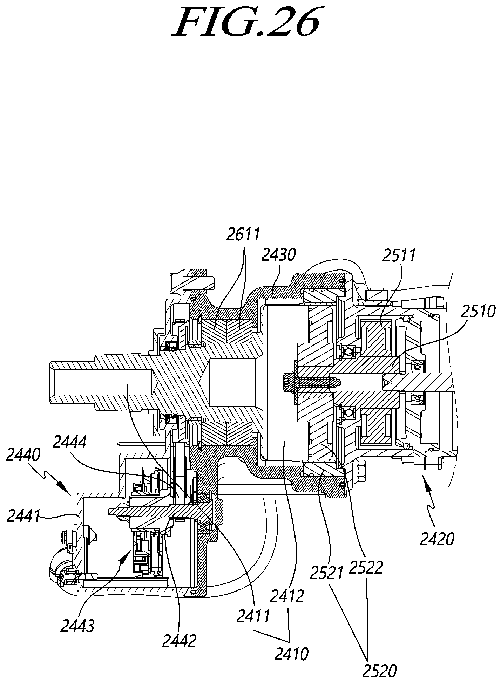

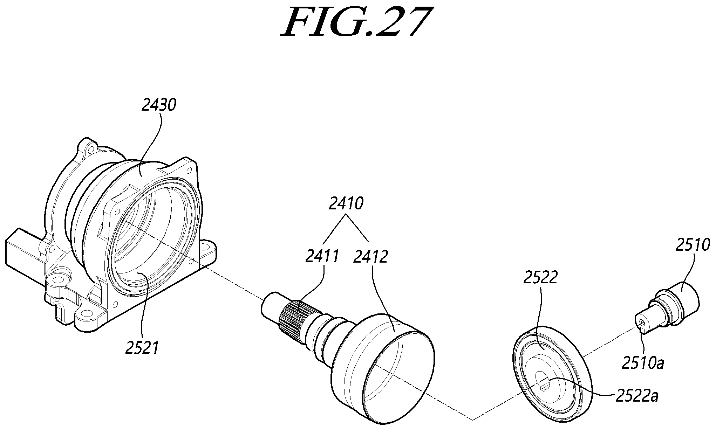

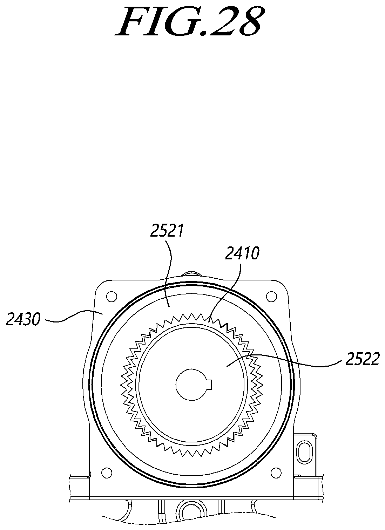

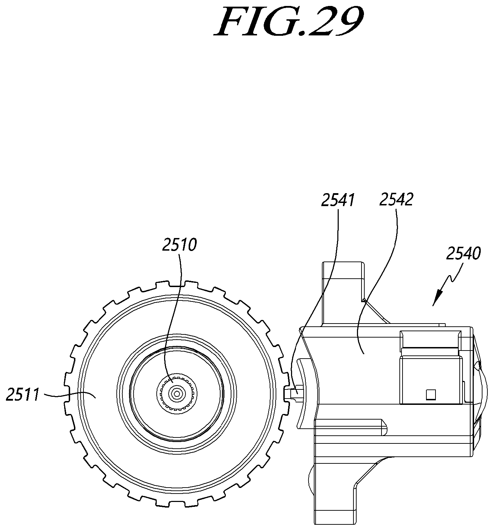

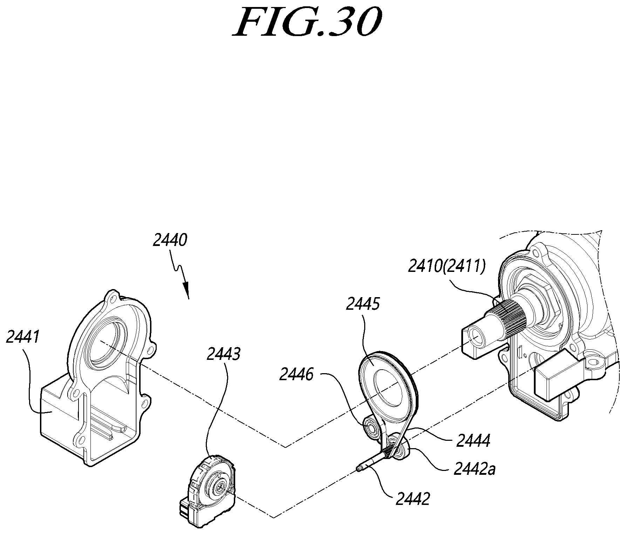

FIG. 24 is a perspective view illustrating a lean actuator of a steering system according to the present embodiments. FIG. 25 is an exploded perspective view illustrating a lean actuator of a steering system according to the present embodiments. FIG. 26 is a cross-sectional view illustrating a lean actuator of a steering system according to the present embodiments. FIG. 27 is an exploded perspective view illustrating a portion of a lean actuator of a steering system according to the present embodiments. FIG. 28 is a front view illustrating a portion of a lean actuator of a steering system according to the present embodiments. FIG. 29 is a front view illustrating a portion of a lean actuator of a steering system according to the present embodiments. FIG. 30 is an exploded perspective view illustrating a portion of a lean actuator of a steering system according to the present embodiments.

According to the present embodiments, there may be provided a steering system 100 comprising a steering input device 110 including a steering shaft 310 and a steering angle sensor 330 sensing a rotational angle of the steering shaft 310, a steering actuator 120 including a first output shaft 1530 connected with a knuckle arm and a steering motor 1510 connected with the first output shaft 1530 by a first reducer 1520, a lean actuator 2420 including a second output shaft 2410 coupled with a lean bar and a lean motor 2420 connected with the second output shaft 2410 by a second reducer 2520, and an electric controller 140 receiving steering angle information from the steering angle sensor 330 to control the steering motor 1510 and the lean motor 2420.

According to the present embodiments, there may also be provided a mobility vehicle including the steering system 100 according to the present embodiments.

Referring to FIG. 1, a steering system 100 according to the present embodiments includes a steering input device 110, a steering actuator 120, a lean actuator 130, and an electric controller 140.

The steering input device 110 receives the driver's steering wheel manipulation, and the electric controller 140 receives steering angle information from the steering angle sensor 330 of the steering input device 110.

The electric controller 140 may control the steering actuator 120 and the lean actuator 130 based on the steering angle information received from the steering angle sensor 330 and other information, e.g., vehicle velocity, driver's steering torque, and yaw rate.

The information received by the electric controller 140 may further include rotation angle information about the first output shaft 1530 of the steering actuator 120 and/or rotation angle information about the second output shaft 2410 of the lean actuator 130. Under the control of the electric controller 140, the steering actuator 120 may generate a steering force for steering the wheels, and steering of the mobility vehicle according to the present embodiments may be performed.

Further, under the control of the electric controller 140, the lean actuator 130 may generate a torque for rotating the lean bar, and the lean function of the mobility vehicle according to the present embodiments may be performed.

The lean function of the mobility vehicle according to the present embodiments is described with reference to FIGS. 2A to 2C. FIG. 2A illustrates a state in which the lean function of the mobility vehicle according to the present embodiments is not performed, e.g., stop, advance, or reverse state.

FIGS. 2B and 2C illustrate states in which the lean function of the mobility vehicle according to the present embodiments is performed. FIG. 2B illustrates a state in which the vehicle body is tilted by the lean function while turning, and FIG. 2C illustrates a state in which the heights of the left and right wheels are offset by the lean function in a stepped area. In other words, the use of the lean function may enhance driving stability while turning and provide a dynamic driving environment to the user while providing suspension against the stepped ground surface.

The mobility vehicle according to the present embodiments includes a lean bar of which two opposite ends are connected to the left and right wheels to perform the lean function. The two opposite ends of the lean bar are connected to the left and right wheels through a linkage structure. The lean actuator 130 of the steering system 100 according to the present embodiments includes a second output shaft 2410 coupled with the lean bar, and the lean function is performed as the lean bar is rotated by the lean actuator 130.

According to an embodiment, the steering actuator 120 of the steering system 100 according to the present embodiments may steer the front wheels of the mobility vehicle according to the present embodiments. The two front wheels of the mobility vehicle according to the present embodiments may be connected to the lean bar, and the lean function may be performed by the lean actuator 130, and they may be steered by the steering actuator 120.

The steering input device 110 of the steering system 100 according to the present embodiments is described with reference to FIGS. 3 to 14.

Referring to FIG. 3, the steering input device 110 according to the present embodiments includes a steering shaft 310 and a steering angle sensor 330 sensing the rotational angle of the steering shaft 310. The steering wheel is coupled to the steering shaft 310 so that the driver's steering wheel manipulation is input.

The steering angle sensor 330 senses the rotational angle of the steering shaft 310, and the steering angle information sensed by the steering angle sensor 330 is transmitted to the electric controller 140. The electric controller 140 receives the steering angle information and controls the steering actuator 120 and the lean actuator 130.

Referring to FIGS. 4 to 11, according to an embodiment, the steering input device 110 may further include a rotor 410 coupled to the steering shaft 310 and having a spring 413 with a circumferential separation space 413c formed between two opposite ends thereof, a first supporting member 420 coupled to the rotor 410 and positioned in the separation space 413c, a housing 320 receiving the rotor 410 and rotatably coupled to the steering shaft 310, and a second supporting member 430 positioned in the separation space 413c and circumferentially supported by the housing 320.

Meanwhile, FIGS. 4 to 11 illustrate the steering input device 110 according to an embodiment and illustrate an embodiment in which a first support 431 and a second support 432 of the second supporting member 430 are fixed to the housing 320 in the slit 324 by the coupling member 440.

The steering input device 110 according to the present embodiments is not limited to those shown in FIGS. 4 to 11. According to an embodiment, as shown in FIG. 12, the steering input device 110 according to the present embodiments may include an elastic member 1200 provided between the first support 431 and the second support 432.

The rotor 410 is coupled to the steering shaft 310 and rotated together with the steering shaft 310. At least one of the rotor 410 and the steering shaft 310 may have serrations. The rotor 410 and the steering shaft 310 may be circumferentially fixed to each other by the serrations to be rotated together. The steering shaft 310 is rotatably coupled to the housing 320. The steering shaft 310 may be coupled to the housing 320 by a bearing.

The housing 320 receives the rotor 410. The housing 320 may include a main housing 151 formed as a hollow to receive the rotor 410, a cover housing 323 coupled with one side of the steering shaft 310 and coupled to the main housing 151, and a sensor housing 322 coupled with the other side of the steering shaft 310 to receive a steering angle sensor 330. The main housing 151 may be coupled to the vehicle body, and the steering input device 110 according to the present embodiments may be installed.

The rotor 410 has a spring 413. As the steering shaft 310 rotates, torque generated as the spring 413 twists is provided to the steering shaft 310 as a reaction torque, enhancing the driver's sense of steering. Further, the steering wheel rotated by the torque provided by the spring 413 may be returned to the neutral position.

A circumferential separation space 413c is formed between one end (see reference numeral 413a) and the other end (see reference numeral 413b) of the spring 413 (see FIG. 7). The first supporting member 420 and the second supporting member 430 are positioned in the separation space 413c formed between the two opposite ends of the spring 413 (see FIG. 8).

Since the sense of steering provided to the driver should be the same regardless of the steering wheel rotation direction, the two opposite ends of the spring 413, the first supporting member 420, and the second supporting member 430 are provided left/right symmetrically to each other. As illustrated in the drawings, the first supporting member 420 may have a rod shape parallel to the steering shaft 310, and the two opposite ends of the spring 413 may be supported.

The second supporting member 430 may include a first support 431 supporting one end of the spring 413 and a second support 432 supporting the other end of the spring 413, as is described below in detail.

The first supporting member 420 is coupled to the rotor 410 and rotated together with the steering shaft 310, and the second supporting member 430 is circumferentially supported on the housing 320 without being rotated. In other words, when the steering shaft 310 is rotated, the first supporting member 420 is rotated but the second supporting member 430 is fixed.

As described below in detail, the second supporting member 430 may be inserted into the slit 324 to be axially movable with respect to the housing 320 while being circumferentially fixed. The first supporting member 420 is rotated while being supported on the one end or the other end of the spring 413 by the rotation of the steering shaft 310, but the other end or the one end of the spring 413 is supported and fixed to the second supporting member 430.

Accordingly, the spring 413 is twisted, and a reaction torque is provided to the steering shaft 310. A structure for providing a reaction torque due to twisting of the spring 413 is described below in detail.

Referring to FIG. 5, according to an embodiment, the steering input device 110 according to the present embodiments may further include a damper 511 coupled to the steering shaft 310 and the housing 320. The damper 511 may be coupled to an end portion of the steering shaft 310 and coupled to the sensor housing 322. The damper 511 provides damping in the rotational direction to the steering shaft 310, thereby enhancing the sense of steering.

Referring to FIG. 6, according to an embodiment, the first rotor 410 may have a first stopper 411a, and the housing 320 may have a second stopper 323a that may be circumferentially supported on the first stopper 411a. The rotation of the steering shaft 310 is stopped as the first stopper 411a is supported by the second stopper 323a.

According to an embodiment, the rotor 410 may include a first rotor 410 coupled with the first supporting member 420 and a second rotor 410 where the spring 413 is seated.

According to an embodiment, the first rotor 410 may have a first stopper 411a, and the housing 320 may have a second stopper 323a that may be circumferentially supported on the first stopper 411a. The rotation of the steering shaft 310 is stopped as the first stopper 411a is supported by the second stopper 323a.

According to an embodiment, the first stopper 411a may be formed on one axial side surface of the first rotor 410, and the first supporting member 420 may be coupled to the other axial side surface of the first rotor 410.

The second stopper 323a is formed on the inner surface of the sensor housing 322, and the first stopper 411a and the second stopper 323a are formed on surfaces facing each other of the first rotor 410 and the sensor housing 322, respectively. The first supporting member 420 may be coupled to the other axial side surface of the first rotor 410, i.e., the surface opposite to the surface where the first stopper 411a is formed.

According to an embodiment, the spring 413 may be seated on an outer surface of the second rotor 410. The second rotor 410 may be coupled to the other axial side surface of the first rotor 410, i.e., the surface to which the first supporting member 420 is coupled.

Accordingly, the first rotor 410 and the second rotor 410 are rotated together. The spring 413 is seated on the outer surface of the second rotor 410, and as is described below, two opposite end portions of the spring 123 are bent and protrude radially from the outer surface of the second rotor 410.

According to an embodiment, the second rotor 410 may include a first bushing 521 coupled to the first rotor 410 and having a first protrusion 521a formed on an outer surface thereof to be supported by the spring 413 on one axial side and a second bushing 522 coupled to the first bushing 521 and having a second protrusion 522a formed on an outer surface thereof to be supported by the spring 413 on the other axial side.

The first bushing 521 and the second bushing 522 are coupled in the axial direction, and the spring 413 is positioned between the first protrusion 521a and the second protrusion 522a on the outer surface of the first bushing 521 and the second bushing 522 (see FIG. 5).

Referring to FIGS. 7 and 8, according to an embodiment, one end and the other end of the spring 413 may be bent and radially extend, forming a separation space 413c. The two opposite ends of the spring 413 are axially spaced apart from each other while forming the circumferential separation space 413c.

According to an embodiment, one end of the spring 413 may be simultaneously supported on one circumferential side thereof by the first supporting member 420 and the second supporting member 430, and the other end of the spring 413 may be simultaneously supported on the other circumferential side thereof by the first supporting member 420 and the second supporting member 430. In other words, the one end and the other end of the spring 413 may be supported on their opposite sides, respectively, simultaneously by the first supporting member 420 and the second supporting member 430.

The one end of the spring 413 is supported on one circumferential side by the first supporting member 420, and the other end of the spring 413 is supported on the other circumferential side by the first supporting member 420. In other words, the one end and the other end of the spring 413 are supported on their opposite sides by the first supporting member 420 positioned in the separation space 413c. When the rotor 410 is rotated to one circumferential side together with the steering shaft 310, the first supporting member 420 is rotated while being supported on one end of the spring 413.

However, since the other end of the spring 413 is not rotated but fixed while being supported by the second supporting member 430 circumferentially supported by the housing 320 without being rotated, the spring 413 is twisted, providing reaction torque to the steering shaft 310.

Conversely, if the rotor 410 is rotated to the other circumferential side together with the steering shaft 310, the first supporting member 420 is rotated while being supported by the other end of the spring 413. Since the one end of the spring 413 is not rotated but fixed while being supported by the fixed second supporting member, the spring 413 may be likewise twisted, providing reaction torque to the steering shaft 310.

Further, if the two opposite ends of the spring 413 are not simultaneously supported by the first supporting member 420 and the second supporting member 430, the driver's sense of steering decreases.

In other words, if the two opposite ends of the spring 413 are supported only by the first supporting member 420 in the neutral state of the steering wheel, and a gap is present between two opposite side surfaces of the second supporting member 430, when the steering shaft 310 is circumferentially rotated, the spring 413 is not twisted until the end portion of the spring 413 is supported by the second supporting member 430, so that no reaction torque is provided, thus deteriorating the sense of steering.

Or, if the two opposite ends of the spring 413 are supported only by the second supporting member 430 in the neutral state of the steering wheel, and a gap is present between the two opposite ends of the spring 413 and the two opposite side surfaces of the first supporting member 420, the steering shaft 310 is idled until the end portion of the spring 413 is supported by the first supporting member 420, deteriorating the sense of steering.

Further, if the two opposite ends of the spring 413 are supported by neither the first supporting member 420 or the second supporting member 430 in the neutral state of the steering wheel, the driver's sense of steering decreases. Therefore, in order to provide a better sense of steering to the driver, the two opposite ends of the spring 413 need to be simultaneously supported by the first supporting member 420 and the second supporting member 430.

FIG. 8 illustrates a state in which two opposite ends of the spring 413 are simultaneously supported by the first supporting member 420 and the second supporting member 430 at a neutral position. FIG. 9 illustrates a state in which the steering shaft 310 is rotated counterclockwise from the neutral position, one end of the spring 413 is fixed while being supported by the second supporting member 430, and the other end of the spring 413 is rotated while being supported by the first supporting member 420.

As illustrated in FIG. 8, as two opposite ends of the spring 413 are simultaneously supported by the first supporting member 420 and the second supporting member 430 in the neutral state, when the steering shaft 310 is rotated as illustrated in FIG. 9, one end or the other end of the spring 413 are stopped from moving by the second supporting member 430 even when the first supporting member 420 is rotated.

Accordingly, as soon as the driver rotates the steering wheel from the neutral position, the spring 413 is twisted and a reaction torque is provided.

When there is a gap between the end portion of the spring 413 and the second supporting member 430, the spring 413 is not twisted until before the driver rotates the steering wheel by the gap, and thus the sense of steering is reduced. Through such a structure, the steering input device 110 according to the present embodiments may provide a better sense of steering to the driver.

However, given, e.g., manufacture tolerances or assembly tolerances, it is impossible to actually assemble components so that two opposite ends of the spring 413 are simultaneously supported by the first supporting member 420 and the second supporting member 430. Accordingly, a design is required for assembling the device so that two opposite ends of the spring 413 is simultaneously supported by the first supporting member 420 and the second supporting member 430.

According to an embodiment, the second supporting member 430 may include a first support 431 supporting one end of the spring 413 and a second support 432 supporting the other end of the spring 413.

The first supporting member 420 may be formed as a single body and may be simultaneously supported on two opposite ends of the spring 413, and the second supporting member 430 may be separated into the first support 431 and the second support 432 which, respectively, may be supported on one end and the other end of the spring 413. In other words, one end of the spring 413 may be simultaneously supported by the first supporting member 420 and the first support 431, and the other end of the spring 413 may be simultaneously supported by the first supporting member 420 and the second support 432.

Referring to FIG. 10, according to an embodiment, the housing 320 may have a slit 324 where the first support 431 and the second support 432 are inserted to be axially movable. The slit 324 is axially formed, and the first support 431 and the second support 432 are inserted into the slit 324 to be axially movable with respect to the housing 320 while being circumferentially fixed.

Referring to FIG. 11, according to an embodiment, the first support 431 and the second support 432 may be formed to have an axially narrowing width.

While being positioned in an axial inside on the slit 324, the first support 431 and the second support 432 are not supported on two opposite ends of the spring 413 but, as moved along the slit 324, the first support 431 and the second support 432 are naturally supported on the two opposite ends of the spring 413 supported by the first supporting member 420. Accordingly, the two opposite ends of the spring 413 may be simultaneously supported by the first supporting member 420 and the second supporting member 430.

According to an embodiment, the first support 431 and the second support 432 may be fixed to the housing 320 in the slit 324 by the coupling member 440. In other words, the positions of the first support 431 and the second support 432 may be fixed by the coupling member 440 after bringing the first support 431 and the second support 432 in tight contacting with the one end and the other end, respectively, of the spring 413 along the slit 324.

With the two opposite ends of the spring 413 supported on two opposite side surfaces of the first supporting member 420, the first support 431 and the second support 432 may be coupled to the housing 320 to tightly contact the one end and the other end, respectively, of the spring 413 in the separation space 413c.

Accordingly, one end of the spring 413 may be simultaneously supported by the first supporting member 420 and the first support 431, and the other end of the spring 413 may be simultaneously supported by the first supporting member 420 and the second support 432.

Referring to FIGS. 12 and 13, according to an embodiment, an elastic member 1200 may be provided between the first support 431 and the second support 432. The elastic member 1200 is supported on two opposite ends thereof by the first support 431 and the second support 432 while providing elastic force to the two supports axially outward.

The first support 431 and the second support 432, respectively may be brought in tight contact with the one end and the other end of the spring 413 by the elastic force of the elastic member 1200, so that the one end of the spring 413 may be simultaneously supported by the first supporting member 420 and the first support 431, and the other end of the spring 413 may be simultaneously supported by the first supporting member 420 and the second support 432.

Referring to FIG. 14A, an example method for bringing the first support 431 and the second support 432 in tight contact with two opposite ends of the spring 413 using the elastic force of the elastic member 1200 is described.

First, in the initial state, the elastic member 1200 is compressed by the jig 1401 coupled to the first support 431 and the second support 432. If the jig 1401 is removed after the assembly is completed, the first support 431 and the second support 432 are moved along the slit 324 outward in the axial direction by the elastic force of the elastic member 1200, and come in tight contact with one end and the other end, respectively, of the spring 413.

Through this process, two opposite ends of the spring 413 may be easily supported by the first supporting member 420 and the second supporting member 430 at the same time.

Referring to FIG. 14B, after the first support 431 and the second support 432 are supported on the two opposite ends of the spring 413 using the elastic force of the elastic member 1200, the positions of the two supports may be fixed using the fixing member 1402.

After the positions of the two supports are fixed, the elastic member 1200 may be removed between the first support 431 and the second support 432.

Next, referring to FIGS. 15 to 23, the steering actuator 120 of the steering system 100 according to the present embodiments is described.

Referring to FIG. 15, the steering actuator 120 according to the present embodiments includes a first output shaft 1530 connected with a knuckle arm and a steering motor 1510 connected with the first output shaft 1530 by a first reducer 1520.

The steering motor 1510 and the first output shaft 1530 are connected by the first reducer 1520, and the power of the steering motor 1510 is reduced by the first reducer 1520 to rotate the first output shaft 1530.

The first output shaft 1530 is connected to the knuckle arm (not shown) directly or indirectly, e.g., via a linkage structure, and the wheels of the vehicle are steered by rotation of the first output shaft 1530.

As described below in detail, the first housing 1541 receives the first reducer 1520 and is coupled to the steering motor 1510, and the second housing 1542 receives the first output shaft 1530 and is coupled to the first housing 1541.

The second housing 1542 includes a lower housing and an upper housing, and the lower housing and the upper housing may be coupled to each other while receiving the first output shaft 1530 therebetween. The first housing 1541 has a first coupling portion 1551, and the second housing 1542 has a second coupling portion 1552, and they are coupled by a coupling member 1553.

Referring to FIG. 16, according to an embodiment, the first output shaft 1530 may be coupled with a Pitman arm 1600 connected to the knuckle arm. The Pitman arm 1600 is coupled to the first output shaft 1530 to rotate along with the first output shaft 1530. The Pitman arm 1600 may be connected to the knuckle arm directly or indirectly, e.g., via a linkage structure.

According to an embodiment, the first output shaft 1530 and the Pitman arm 1600 may be coupled via serrations. An end portion of the first output shaft 1530 may be provided to protrude, and the protruding end of the first output shaft 1530 may have serrations to which the Pitman arm 1600 is coupled.

Referring to FIG. 17, according to an embodiment, the steering actuator 120 of the steering system 100 according to the present embodiments may include a sensor 1740 for sensing the rotational angle of the first output shaft 1530.

A sensor cover 1741 for receiving the sensor 1740 may be coupled to the first housing 1541. The sensor 1740 may sense the rotational angle of the first output shaft 1530, and the sensed rotation angle information may be transmitted to the electric controller 140 controlling the steering motor 1510.

The electric controller 140 may control the steering motor 1510 based on the rotation angle information about the first output shaft 1530 and other information. As shown in the drawings, the sensor 1740 may indirectly sense the rotational angle of the first output shaft 1530 from the rotational angle of the second shaft 1720 of the first reducer 1520.

A structure in which the power of the steering motor 1510 is reduced and transferred to the first output shaft 1530 is described below with reference to FIGS. 17 to 20.

According to an embodiment, the first reducer 1520 may include a first shaft 1710 coupled to the motor shaft of the steering motor 1510 and a second shaft 1720 having a reduction ratio and rotated by rotation of the first shaft 1710.

The first shaft 1710 may be provided coaxially with the motor shaft of the steering motor 1510 to be rotated along with the motor shaft. The second shaft 1720 may be rotated with a reduction ratio with respect to the first shaft 1710.

The reduction ratio of the second shaft 1720 to the first shaft 1710 may be smaller than 1, so that the power of the steering motor 1510 may be primarily reduced while being transferred from the first shaft 1710 to the second shaft 1720.

According to an embodiment, the first shaft 1710 may be a worm shaft, and the second shaft 1720 may have a worm wheel 1721 engaged with the worm shaft.

The first shaft 1710 and the second shaft 1720 are disposed perpendicular to each other, and the worm gear of the worm shaft and the worm wheel 1721 are engaged with each other, and the power of the steering motor 1510 is reduced. One end portion of the worm shaft may be coupled with the motor shaft of the steering motor 1510 by, e.g., a damping coupler 1811. Further, a bearing 1812 may be coupled to the first housing 1541 to support two opposite ends of the first shaft 1710.

According to an embodiment, there may be provided a pressurizing member 1730 that pressurizes the first shaft 1710 in a direction of being engaged with the second shaft 1720.

The pressurizing member 1730 pressurizes the other end portion of the first shaft 1710 to provide a pressurizing force to the first shaft 1710 in the direction of being engaged with the worm wheel 1721 of the second shaft 1720. Noise generated when the first shaft 1710 and the second shaft 1720 are driven is reduced by the pressurizing force provided by the pressurizing member 1730.

The first housing 1541 may have a coupling hole where the pressurizing member 1730 is inserted, so that the pressurizing member 1730 may pressurize the other end portion of the first shaft 1710 in the coupling hole of the first housing 1541.

The pressurizing member 1730 may include a supporting member supported on the other end portion of the first shaft 1710, a coupling member coupled to the first housing 1541, and an elastic member provided between the coupling member and the supporting member.

According to an embodiment, the second shaft 1720 may have a first gear portion 1722, and the first output shaft 1530 may have a second gear portion 1911 engaged with the first gear portion 1722.

According to an embodiment, the reduction ratio of the first output shaft 1530 to the second shaft 1720 may be smaller than 1. In other words, the power of the steering motor 1510 is transferred from the first shaft 1710 to the second shaft 1720 while being primarily reduced, and is then transferred from the second shaft 1720 to the first output shaft 1530 while being secondarily reduced. Therefore, it is possible to obtain a high reduction ratio with a compact structure.

According to an embodiment, the first gear portion 1722 may be a pinion gear, and the second gear portion 1911 may be a sector gear. The second shaft 1720 and the first output shaft 1530 may be disposed parallel to each other, and in their axially overlapping portions, the first gear portion 1722 and the second gear portion 1911, respectively, may be formed and engaged with each other.

Meanwhile, as the power of the steering motor 1510 is transferred in the order of the first shaft 1710, the second shaft 1720, and the first output shaft 1530, noise may be generated between the gear teeth. As described above, the noise between the first shaft 1710 and the second shaft 1720 is reduced by the pressurizing member 1730. Hereinafter, a structure of reducing noise of the second shaft 1720 and the first output shaft 1530 is described.

Referring to FIGS. 20 and 21, according to an embodiment, the steering actuator 120 of the steering system 100 according to the present embodiments may further include a first housing 1541 coupled with the steering motor 1510 and receiving the first reducer 1520 and a second housing 1542 coupled with the first housing 1541 and receiving the first output shaft 1530. The first housing 1541 and the second housing 1542 may be coupled to be relatively rotated with respect to an eccentric axis eccentric from a central axis of the second shaft 1720.

As the relative rotation central axis of the first housing 1541 and the second housing 1542 is eccentric from the central axis of the second shaft 1720, the inter-axis distance between the second shaft 1720 and the first output shaft 1530 is adjusted as the two housings are relatively rotated.

As the inter-axis distance between the second shaft 1720 and the first output shaft 1530 is adjusted, the gap between the first gear portion 1722 and the second gear portion 1911 is adjusted, reducing noise.

The relative rotation central axis of the first housing 1541 and the second housing 1542 may be formed by the coupling portion 2011 and the coupling hole 2012. In other words, the first housing 1541 may have a first communication hole 2111 through which the second shaft 1720 passes, the second shaft 1720 may be provided so that the first gear portion 1722 protrudes outward of the first housing 1541. The second housing 1542 may have a second communication hole 2112 for receiving the second gear portion 1911, and the first gear portion 1722 may be engaged with the second gear portion 1911 in the second communication hole 2112.

The first housing 1541 may have a coupling portion 2011 protruding in the axial direction of the second shaft 1720 and having the first communication hole 2111, and the second housing 1542 may have a coupling hole 2012 to which the coupling portion 2011 is inserted.

As the first housing 1541 and the second housing 1542 are coupled, the coupling portion 2011 is inserted into the coupling hole 2012. The coupling hole 2012 and the coupling portion 2011 have a circular shape, and in a state in which the coupling portion 2011 is inserted in the coupling hole 2012, the first housing 1541 and the second housing 1542 may be relatively rotated about the central axis of the coupling portion 2011 and the coupling hole 2012.

Referring to FIGS. 22 and 23, as the coupling portion 2011 and the coupling hole 2012 are eccentric from the first communication hole 2111, the relative rotation central axis of the first housing 1541 and the second housing 1542 may be eccentric from the central axis of the second shaft 1720.

The coupling portion 2011 and the coupling hole 2012 may be coaxial and eccentric from the first communication hole 2111. Accordingly, as the first housing 1541 and the second housing 1542 are relatively rotated about the central axis of the coupling portion 2011 and the coupling hole 2012 in a state in which the first housing 1541 and the second housing 1542 are coupled, the inter-axis distance between the central axis of the coupling portion 2011 and the coupling hole 2012 and the central axis of the second shaft 1720 and the first communication hole 2111 is increased.

For example, the second housing 1542 may be coupled and fixed to the vehicle body, and the first housing 1541 may be rotated about the second housing 1542 with respect to the central axis of the coupling portion 2011 and the coupling hole 2012.

By the relative rotation of the first housing 1541 and the second housing 1542, the inter-axis distance between the central axis of the coupling portion 2011 and the coupling hole 2012 and the central axis of the second shaft 1720 and the first communication hole 2111 is increased/decreased, so that the inter-axis distance between the second shaft 1720 and the second output shaft 1530 fixed to the second housing 1542 is also increased/decreased.

Therefore, the inter-gear tooth gap between the first gear portion 1722 of the second shaft 1720 and the second gear portion 1911 of the first output shaft 1530 may be adjusted, reducing noise.

According to an embodiment, the first housing 1541 may have at least one first coupling portion 1551 having a long hole concentric with the coupling portion 2011 and the coupling hole 2012, and the second housing 1542 may have at least one a second coupling portion 1552 having a hole, and the first housing 1541 and the second housing 1542 may be coupled by a coupling member 1553 coupled to the first coupling portion 1551 and the second coupling portion 1552.

In other words, to adjust the inter-gear tooth gap between the first gear portion 1722 and the second gear portion 1911, the first housing 1541 and the second housing 1542 may be relatively rotated, and the first housing 1541 and the second housing 1542 may then be fixed by the coupling member 1553.

The first coupling portion 1551 formed in the first housing 1541 has an arc-shaped long hole, and the long hole is formed to be concentric with the coupling portion 2011 and the coupling hole 2012.

According to an embodiment, the coupling member 1553 may be a bolt. As the coupling member 1553 is inserted into the long hole of the first coupling portion 1551 and the hole of the second coupling portion 1552, and a nut is coupled to the coupling member 1553, the first housing 1541 and the second housing 1542 may be fixed to each other.

As the long hole of the first coupling portion 1551 is formed concentrically with the coupling portion 2011 and the coupling hole 2012, the first housing 1541 and the second housing 1542 may be relatively rotated in a state in which the coupling member 1553 is inserted in the long hole of the first coupling portion 1551 and the hole of the second coupling portion 1552.

In other words, after the gap between gear teeth is adjusted through relative rotation in a state in which the nut is loosely coupled to the coupling member 1553, the nut may be tightened, simply fixing the first housing 1541 and the second housing 1542.

Next, referring to FIGS. 24 to 30, the lean actuator 130 of the steering system 100 according to the present embodiments is described.

The lean actuator 130 of the steering system 100 according to the present embodiments includes a second output shaft 2410 coupled with the lean bar and a lean motor 2420 connected with the second output shaft 2410 by a second reducer 2520. The power of the lean motor 2420 is reduced by the second reducer 2520 to rotate the second output shaft 2410 and, as the second output shaft 2410 is rotated, the lean function is performed.

Referring to FIGS. 24 and 25, the lean actuator 130 of the steering system 100 according to the present embodiments may further include an input shaft 2510 coupled to the motor shaft 2421 of the lean motor 2420 and connected with the second reducer 2520 and a housing 2430 including the second reducer 2520 and coupled with the lean motor 2420.

According to an embodiment, the motor shaft 2421 and the input shaft 2510 may be coupled via serrations. The input shaft 2510 coupled to the motor shaft 2421, together with a locking gear 2511, is received in a housing cover 2530. An end portion of the input shaft 2510 protrudes from a sensor cover 2441 and is coupled with the second reducer 2520. A locking member 2540 is coupled to one side of the housing cover 2530.

According to an embodiment, the second output shaft 2410 may have a coupling portion 2411 with serrations where the lean bar is coupled. The housing 2430 receives the second reducer 2520, and the coupling portion 2411 of the second output shaft 2410 protrudes from the housing 2430.

The lean bar is coupled to the coupling portion 2411 of the second output shaft 2410 protruding from the housing 2430. The lean bar and the coupling portion 2411 may be coupled to each other via serrations, and a nut may be coupled to the coupling portion 2411 to fix the lean bar to the second output shaft 2410.

According to an embodiment, the housing 2430 may be coupled with a bearing 2611 that supports rotation of the second output shaft 2410. As is described below in detail, an end of the second output shaft 2410 is provided between a fixed gear 2521, as a gear portion 2412, and a rotating cam 2522, and the other end of the second output shaft 2410 may be coupled with the lean bar as the coupling portion 2411. The bearing 2611 may support a middle portion of the second output shaft 2410 to the housing 2430.

Referring to FIGS. 26 and 27, according to an embodiment, the second reducer 2520 includes a rotating cam 2522 coupled with the input shaft 2510 and a fixed gear 2521 coupled to the housing 2430, and the second output shaft 2410 may include a gear portion 2412 coupled with the rotating cam 2522 and engaged with the fixed gear 2521. In other words, the second reducer 2520 includes the rotating cam 2522 and the fixed gear 2521, and the second output shaft 2410 may include the coupling portion 2411 and the gear portion 2412.

Although not shown in FIGS. 24 to 27 for convenience of illustration and understanding, as shown in FIG. 28, gear teeth may be formed on an inner surface of the fixed gear 2521 having an outer surface supported by the housing 2430 while being coupled, and gear teeth engaged with the gear teeth of the fixed gear 2521 may be formed on an outer surface of the gear portion 2412 of the second output shaft 2410.

The gear portion 2412 of the second output shaft 2410 is formed as a hollow having an oval shape, and gear teeth engaged with the gear teeth of the fixed gear 2521 are formed on the outer surface of the gear portion 131b, and the rotating cam 2522 is coupled to the inner surface of the gear portion 131b. A bearing may be provided between the rotating cam 2522 and the gear portion 2412.

The rotating cam 2522 is coupled with the input shaft 2510 to be rotated by the power of the lean motor 2420, and the power of the lean motor 2420 is reduced by the rotating cam 2522, the gear portion 2412, and the fixed gear 2521 and output to the second output shaft 2410. According to an embodiment, the gear portion 2412 of the second output shaft 2410 and the second reducer 2520 may form a harmonic reducer.

According to an embodiment, a key pin 2510a may be coupled to an outer surface of the input shaft 2510, and the rotating cam 2522 may have a key recess 2522a engaged with the key pin 2510a.

A depressed recess is formed in the outer surface of the input shaft 2510, so that the key pin 2510a may be inserted into the depressed recess to be coupled to the input shaft 2510. As the key pin 2510a is inserted into the key recess 2522a of the rotating cam 2522, the input shaft 2510 and the rotating cam 2522 may be circumferentially fixed.

Referring to FIGS. 25 and 29, the lean actuator 130 of the steering system 100 according to the present embodiments may further include a locking member 2540 for restricting rotation of the lean bar. The rotation of the lean bar may be restricted by the operation of the locking member 2540, rendering it impossible to perform the lean function of the mobility vehicle according to the present embodiments.

For example, in a context where the lean function is unnecessary, such as when the vehicle moves forward or back or stops, or the vehicle body is required to be in upright position, the locking member 2540 may be operated to allow the lean bar to remain in the horizontal state.

According to an embodiment, the locking member 2540 may lock the rotation of the input shaft 2510, restricting the rotation of the lean bar.

According to an embodiment, a locking gear 2511 may be coupled to the input shaft 2510, and the locking member 2540 may include a locking pin 2541 that advances to engage with the locking gear 2511 or reverses to disengage from the locking gear 2511 and a driving unit 2542 that advances or reverses the locking pin 2541.

The locking pin 2541 may be advanced or reversed by the driving unit 2542. In the advanced state of the locking pin 2541, an end portion thereof may be engaged with the gear teeth of the locking gear 2511, so that rotation of the locking gear 2511 and the input shaft 2510 coupled with the locking gear 2511 may be restricted, and so may the rotation of the lean bar.

In the reversed state of the locking pin 2541, an end portion thereof may be disengaged from the gear teeth of the locking gear 2511, so that the input shaft 2510 and the lean bar may be rotated by the lean motor 2420. The locking gear 2511 may be coupled to the input shaft 2510 via serrations.

Referring to FIGS. 26 and 30, the lean actuator 130 of the steering system 100 according to the present embodiments may further include a sensor unit 2440 sensing the rotational angle of the second output shaft 2410. In other words, the sensor unit 2440 may sense the rotational angle of the lean bar coupled to the second output shaft 2410.

The rotational angle information about the second output shaft 2410, sensed by the sensor unit 2440, may be transmitted to the electric controller 140, and the electric controller 140 may control the lean motor 2440 using the rotational angle information about the second output shaft 2410.

According to an embodiment, the sensor unit 2440 may include a rotational shaft 2442 rotated in conjunction with the second output shaft 2410 and a sensor 2443 sensing the rotational angle of the rotational shaft 2442.

The sensor 2443 senses the rotational angles of the second output shaft 2410 and the lean bar from the rotational angle of the rotational shaft 2442. The sensor 2443 and the rotational shaft 2442 may be received inside the sensor cover 2441 coupled to the housing 2430.

According to an embodiment, the gear ratio of the rotational shaft 2442 to the second output shaft 2410 may be larger than 1. Accordingly, the sensor 2443 sensing the rotational angle of the second output shaft 2410 from the rotational angle of the rotational shaft 2442 may more accurately sense the rotational angle of the second output shaft 2410.

Since the gear ratio of the rotational shaft 2442 to the second output shaft 2410 is larger than 1, the accuracy of the sensor 2443 is enhanced as compared with when the rotational angle of the second output shaft 2410 is directly sensed.

According to an embodiment, an end of the rotational shaft 2442 may be coupled to the sensor 2443, and the other end of the rotational shaft 2442 may be supported by the bearing 2442a coupled to the housing 2430. In other words, the two opposite ends of the rotational shaft 2442 may be supported by the sensor 2443 and the bearing 2442a, respectively.

According to an embodiment, the second output shaft 2410 and the rotational shaft 2442 may be connected through a belt 2444. In other words, the second output shaft 2410 and the rotational shaft 2442 may be disposed horizontally, and be connected through the belt 2444 so that the rotational shaft 2442 may be rotated in conjunction with the second output shaft 2410.

According to an embodiment, a pulley 2445 around which the belt 2444 is wound may be coupled to the second output shaft 2410. The rotational shaft 2442 may have gear teeth engaged with the pulley 2445, or the pulley around which the belt 2444 is wound may be coupled, as shown in the drawings.

According to an embodiment, the diameter of the pulley 2445 may be larger than the diameter of the rotational shaft 2442. Accordingly, the gear ratio of the rotational shaft 2442 to the second output shaft 2410 may be larger than 1, and the accuracy of the sensor 2443 may be enhanced.

According to an embodiment, there may be provided a bearing 2446 pressurizing the outer surface of the belt 2444. The bearing 2446 is supported on the outer surface of the belt 2444 and pressurizes the belt 2444, so that the tension of the belt 2444 is maintained, and a slip or jump is prevented between the belt 2444 and the pulley 2445 and/or between the belt 2444 and the rotational shaft 2442.

By the so-structured steering system and the mobility vehicle including the same, there may be provided a steering system having a compact structure and capable of enhancing the driver's sense of steering and a mobility vehicle including the same.

The above description has been presented to enable any person skilled in the art to make and use the technical idea of the disclosure, and has been provided in the context of a particular application and its requirements. Various modifications, additions and substitutions to the described embodiments will be readily apparent to those skilled in the art, and the general principles defined herein may be applied to other embodiments and applications without departing from the spirit and scope of the disclosure. The above description and the accompanying drawings provide an example of the technical idea of the disclosure for illustrative purposes only. That is, the disclosed embodiments are intended to illustrate the scope of the technical idea of the disclosure. Thus, the scope of the disclosure is not limited to the embodiments shown, but is to be accorded the widest scope consistent with the claims. The scope of protection of the disclosure should be construed based on the following claims, and all technical ideas within the scope of equivalents thereof should be construed as being included within the scope of the disclosure.

## Claims

1. A steering system, comprising:
a steering input device including a steering shaft and a steering angle sensor sensing a rotational angle of the steering shaft;
a steering actuator including a first output shaft connected with a knuckle arm and a steering motor connected with the first output shaft by a first reducer;
a lean actuator including a second output shaft coupled with a lean bar and a lean motor connected with the second output shaft by a second reducer; and
an electric controller receiving steering angle information from the steering angle sensor to control the steering motor and the lean motor.

2. The steering system of claim 1, wherein the steering input device includes:
a rotor coupled to the steering shaft and having a spring with a circumferential separation space formed between two opposite ends thereof;
a first supporting member coupled to the rotor and positioned in the separation space;
a housing receiving the rotor and rotatably coupled to the steering shaft; and
a second supporting member positioned in the separation space and circumferentially supported by the housing.

3. The steering system of claim 2, wherein one end of the spring is simultaneously supported on one circumferential side thereof by the first supporting member and the second supporting member, and another end of the spring is simultaneously supported on another circumferential side thereof by the first supporting member and the second supporting member.

4. The steering system of claim 2, wherein the second supporting member includes:
a first support supporting one end of the spring; and
a second support supporting another end of the spring.

5. The steering system of claim 4, wherein the housing has a slit where the first support and the second support are inserted to be axially movable.

6. The steering system of claim 5, wherein the first support and the second support are formed to have an axially narrowing width.

7. The steering system of claim 6, wherein the first support and the second support are fixed to the housing in the slit by a coupling member.

8. The steering system of claim 6, wherein an elastic member is provided between the first support and the second support.

9. The steering system of claim 1, wherein the first reducer includes:
a first shaft coupled to a motor shaft of the steering motor; and
a second shaft having a reduction ratio and engaged with the first shaft to rotate.

10. The steering system of claim 9, wherein the second shaft has a first gear portion, and the output shaft has a second gear portion engaged with the first gear portion.

11. The steering system of claim 10, further comprising a first housing coupled with the steering motor and receiving the first reducer and a second housing coupled with the first housing and receiving the first output shaft, wherein the first housing and the second housing are coupled to be relatively rotated with respect to an eccentric axis eccentric from a central axis of the second shaft.

12. The steering system of claim 11, wherein the first housing has at least one first coupling portion with a long hole concentric with the eccentric axis, and the second housing has at least one second coupling portion with a hole, so that the first housing and the second housing are coupled by a coupling member coupled to the first coupling portion and the second coupling portion.

13. The steering system of claim 1, wherein the lean actuator includes:
an input shaft coupled to a motor shaft of the lean motor and connected with the second reducer; and
a housing including the second reducer and coupled with the lean motor.

14. The steering system of claim 13, further comprising a locking member for restricting rotation of the lean bar.

15. The steering system of claim 14, wherein a locking gear is coupled to the input shaft, and wherein the lean motor includes:
a locking pin advancing to engage with the locking gear or reversing to disengage from the locking gear; and
a driving unit advancing or reversing the locking pin.

16. The steering system of claim 13, further comprising a sensor unit sensing a rotational angle of the second output shaft.

17. The steering system of claim 16, wherein the sensor unit includes:
a rotational shaft rotating in conjunction with the second output shaft; and
a sensor sensing a rotational angle of the rotational shaft.

18. The steering system of claim 17, wherein a gear ratio of the rotational shaft to the second output shaft is larger than 1.

19. A mobility vehicle comprising the steering system of claim 1.

20. The mobility vehicle of claim 19, wherein the steering actuator steers a front wheel.
